# EUROPÄISCHE PATENTANMELDUNG

(11) **EP 0 766 472 A2**
(43) Veröffentlichungstag der Anmeldung: **02.04.1997**
(21) Anmeldenummer: 96113772.6
(22) Anmeldetag: 28.08.1996
(51) Int. Cl.: H04N 7/173

(54) **Verfahren zur Nutzung von elektronischen Informationsdiensten unter Sicherstellung der Anonymität von Benutzern gegenüber den Betreibern solcher Dienste**

(30) Priorität: 26.09.1995 DE 19535635
(71) Anmelder: SIEMENS AKTIENGESELLSCHAFT, 80333 München (DE)
(72) Erfinder: Hussmann, Heinrich, Dr., 82327 Tutzing (DE)

(57) **Zusammenfassung**

Das Verfahren ermöglicht bei einer nutzungsorientierten Abrechnung von interaktiven Videodiensten die Sicherstellung der Anonymität des Dienstnutzers gegenüber dem Dienstbetreiber. Zu diesem Zweck wird ein Autorisierungsserver verwendet, der zwar die Identität des Kunden kennt, aber keine Information über das Verbrauchsverhalten im Videodienst hat.

## Beschreibung

Elektronische Informationsdienste wie z.B. sogenannte Online-Informationsdienste, interaktive Videodienste, etc. erhalten eine rasch wachsende Bedeutung. Die Benutzer derartiger Dienste haben dabei ein Interesse an der Wahrung ihrer Datenschutzrechte, insbesondere ihrer Anonymität gegenüber den Betreibern solcher Informationsdienste. Der Schutz dieser Benutzerinteressen ist besonders im Bereich der elektronischen Informationsdienste sehr wichtig, weil hier aufgrund der besonderen technischen Möglichkeiten ein erhöhtes Mißbrauchsrisiko von Benutzerdaten besteht.

Im folgenden ist zur Vereinfachung der Darstellung der vorliegenden Erfindung meist nur von interaktiven Videodiensten in Breitbandnetzen die Rede, obwohl der Fachmann ohne weiteres erkennt, daß die Erfindung analog im Zusammenhang mit beliebigen elektronischen Informationsdiensten und beliebigen Kommunikationsnetzen benutzt werden kann.

Der Zugang zu interaktiven Videodiensten für einen Teilnehmer wird durch eine sog. Set-Top-Box (STB) - also ein Kommunikationsendgerät - ermöglicht, die zwischen Netzabschluß und Fernsehgerät angeordnet ist. Die Set-Top-Box (STB) (allgemein: das Kommunikationsendgerät) stellt über ein breitbandiges Datenübertragungsnetz (allgemein: ein Kommunikationsnetz) eine Verbindung zu Speichern für Videoinformation (sog. Videoserver; allgemein: Informationsserver) her und steuert deren Auswahl und Wiedergabe, abhängig von Eingaben des Teilnehmers (Benutzers).

Der Abruf von Video- und Multimediainformation von den Videoservern ist in den meisten Fällen kostenpflichtig, wodurch ein breites Angebot von privaten Betreibern solcher Geräte möglich wird. Deshalb muß eine Möglichkeit geschaffen werden, wie diese Kosten dem Dienstnutzer in Rechnung gestellt werden können. Dabei sind die Belange des Daten- und Persönlichkeitsschutzes zu berücksichtigen.

In den bestehenden Versuchsfeldern für interaktive Videodienste sowie in der bisher verfügbaren Software für Videoserver wird die Identität eines Benutzers am Videoserver überprüft, wozu dem Videoserver folgende Daten bekannt sein müssen: Name, Adresse oder Bankverbindung, Geheimzahl oder Kennwort. Dadurch hat der Betreiber des Videodienstes grundsätzlich die Möglichkeit, den Namen des Benutzers mit seinem Verbrauchsverhalten (etwa abgerufene Filme oder Filmkategorien, Häufigkeit der Nutzung) zu verknüpfen. Ein Schutz gegen den Mißbrauch solcher Information, etwa für Werbezwecke, kann ausschließlich über vertragliche Regelungen, aber nicht durch technische Mittel erfolgen.

Der vorliegenden Erfindung liegt daher die Aufgabe zugrunde, ein Verfahren zur Sicherstellung der Anonymität von Benutzern elektronischer Informationsdienste anzugeben. Diese Aufgabe wird gemäß der vorliegenden Erfindung durch ein Verfahren zur Nutzung von elektronischen Informationsdiensten unter Sicherstellung der Anonymität von Benutzern gegenüber den Betreibern solcher Dienste mit Merkmalen nach Anspruch 1 gelöst.

Bei diesem Verfahren werden Verbindungen zwischen mindestens einem Kommunikationsendgerät des Benutzers, einem Informationsserver und einem Autorisierungsserver (AR) über ein Kommunikationsnetz (CN) hergestellt und es wird vom einem Kommunikationsendgerät des Benutzers eine Identifikationsinformation an den Autorisierungsserver (AR) übertragen. Daraufhin wird vom Autorisierungsserver eine Nutzungsberechtigungsinformation an ein Kommunikationsendgerät des Benutzers übertragen, welche keine Information über die Identität des Benutzers enthält. Diese Nutzungsberechtigungsinformation wird von einem Kommunikationsendgerät des Benutzers an den Informationsserver übertragen, woraufhin dieser die Gültigkeit der Nutzungsberechtigungsinformation überprüft und den Benutzer bei positivem Ergebnis der Prüfung zur Nutzung des Informationsdienstes zuläßt.

Die Erfindung ermöglicht es, die Identität des Benutzers vor dem Betreiber des Videodienstes geheimzuhalten, erlaubt aber dennoch eine verbrauchsgerechte Abrechnung der Kosten. Zu diesem Zweck wird ein Autorisierungsserver verwendet, der zwar die Identität des Kunden kennt, aber keine Information über das Verbrauchsverhalten im Videodienst hat.

Vorteilhafte Weiterbildungen der Erfindung sollen mit Unteransprüchen unter Schutz gestellt werden.

Figur 1 zeigt in schematischer Weise eine Grundkonfiguration aus einem Kommunikationsendgrät, einem Autorisierungsserver und einem Informationsserver, wie sie einer bevorzugten Ausführungsform der Erfindung zugrundeliegt.

Figur 2 zeigt in schematischer Weise die Zuordnung zwischen Kommunikationsendgeräten und Servern der Grundkonfiguration und ihren Betreibern, sowie die vertraglichen Beziehungen zwischen diesen.

Figur 3 zeigt in schematischer Weise den Ablauf der Kommunikation zwischen den Kommunikationsendgeräten und Servern gemäß einem bevorzugten Ausführungsbeispiel der vorliegenden Erfindung.

Figur 4 zeigt in schematischer Weise den Ablauf der Kommunikation zwischen Autorisierungsserver und Informationsserver vor einer Dienstnutzung durch den Teilnehmer bei der Vereinbarung von Nutzungsberechtigungsinformationen (z.B. Transaktionsdatenworten) zwischen Autorisierungsserver und Informationsserver.

Figur 5 zeigt in schematischer Weise den Ablauf der Kommunikation zwischen Autorisierungsserver und Informationsserver bei einer Autorisierungsrückfrage während einer Dienstnutzung.

Im folgenden wird die Erfindung anhand bevorzugter Ausführungsbeispiele und mit Hilfe der Figuren näher beschrieben.

Dabei werden in den Figuren die folgenden Bezugszeichen verwendet:
- STB: Set-Top-Box, Kommunikationsendgerät
- AR: Autorisierungsserver
- VS: Videoserver, Informationsserver
- CN: Kommunikationsnetz
- SU: Benutzer, Dienstnutzer, Teilnehmer
- UC: Nutzungsvertrag und entsprechende Abrechnung
- BC: Vermittlungsvertrag und entsprechende Abrechnung
- SB: Vermittler, Betreiber des Autorisierungsservers
- SP: Dienstanbieter, Betreiber des Informationsservers
- cAR: Verbindungsaufbau zum Autorisierungsserver
- ad: Autorisierungsdialog
- uid: Identifikation des Benutzers
- aut1: Autorisierung, Übertragung der Nutzungsberechtigungsinformation an den Benutzer
- cVS: Verbindungsaufbau zum Informationsserver
- scd: Dienststeuerungsdialog
- aut2: Nachweis der Autorisierung, Übertragung der Nutzungsberechtigungsinformation an den Informationsserver
- aa: Bestätigung der Autorisierung
- sc: Forsetzung des Dienstes
- cVA: Verbindungsaufbau vom Informationsserver zum Autorisierungsserver
- saut: Übertragung der Nutzungsberechtigungsinformationen
- conf: Rückfrage an der Autorisierungsserver zur Bestätigung der vom Benutzer gesendeten Nutzungsberechtigungsinformation

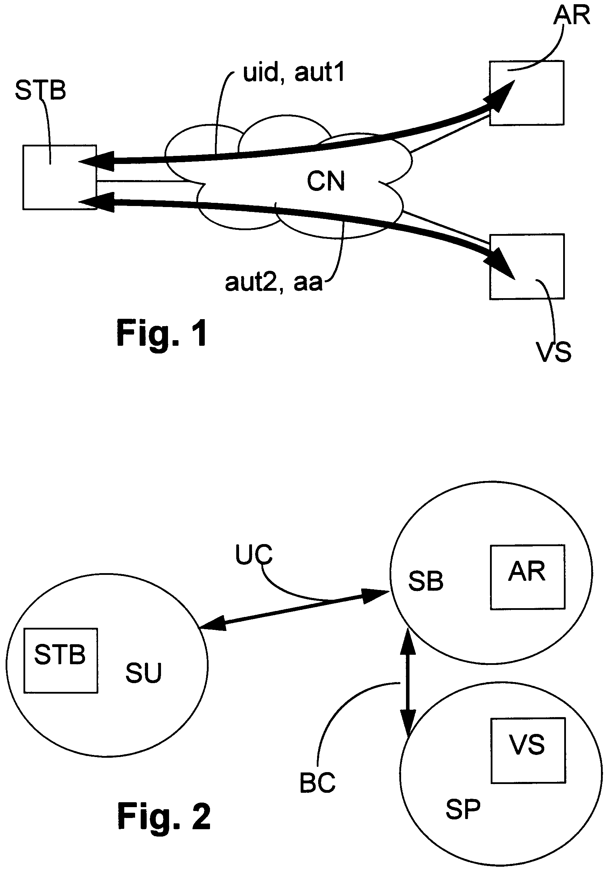

Figur 1 zeigt die zugrundegelegte Konfiguration. Der Benutzer ist über die Set-Top-Box (STB) mit dem Gesamtsystem verbunden. Die Set-Top-Box (allgemein: das Kommunikationsendgerät) kommuniziert über ein Datennetz (allgemein: ein Kommunikationsnetz) sowohl mit dem Autorisierungsserver (AR) als auch mit dem Informationsserver. Die Art und Weise, wie diese Kommunikationsverbindungen aufgebaut werden, ist für die Erfindung unerheblich. Allerdings ist ein flexibler Verbindungsaufbau, etwa über Wählverbindungen, wünschenswert. Um die Zuverlässigkeit der Autorisierung sicherzustellen, ist auch ein Informationsaustausch zwischen Informationsserver und Autorisierungsserver notwendig. Wie unten genauer erklärt wird, genügt hierfür jedoch ein einseitiger Informationsfluß vom Informationsserver zum Autorisierungsserver, der vor dem Aufruf des eigentlichen Videodienstes stattfindet, also noch keine Information über den Verbrauch enthalten kann.

Figur 2 zeigt die vertraglichen Beziehungen, die zwischen den Betreibern der verschiedenen Netzkomponenten bestehen. Die STB wird in diesem Sinne vom Dienstnutzer (Endkunden) betrieben, der Informationsserver von einem Dienstanbieter (z.B. für Video on Demand) und der Autorisierungsserver von einem neutralen Vermittlungs- und Abrechnungsunternehmen, etwa dem Netzbetreiber oder einer Kreditkartenorganisation.

Der Dienstnutzer ist dem Autorisierungsserver namentlich bekannt. Zur Identifizierung vergibt der Autorisierungsserver eine Geheimzahl (oder er setzt vergleichbare, dem Fachmann geläufige Mechanismen ein). Im folgenden wird von einer Identifizierung über Geheimzahl (PIN = Personal Identification Number) ausgegangen; die Erfindung ist jedoch nicht auf dieses Ausführungsbeispiel beschränkt. Zwischen dem Dienstnutzer und dem Dienstanbieter bestehen keine direkten vertraglichen Beziehungen; die Abrechnung für die Dienstnutzung erfolgt nur über den Autorisierungsserver. Die für den Dienst anfallenden Kosten werden vom Betreiber des Autorisierungsservers an den Dienstanbieter erstattet. Zwischen Autorisierungsserver und Dienstanbieter wird ebenfalls eine Form der Identifizierung verwendet, die jedoch anonym ist, d.h. keinen Rückschluß auf den Namen des Dienstnutzers erlaubt. Im folgenden wird davon ausgegangen, daß für diese anonyme Identifizierung willkürlich gewählte Paßworte verwendet werden.

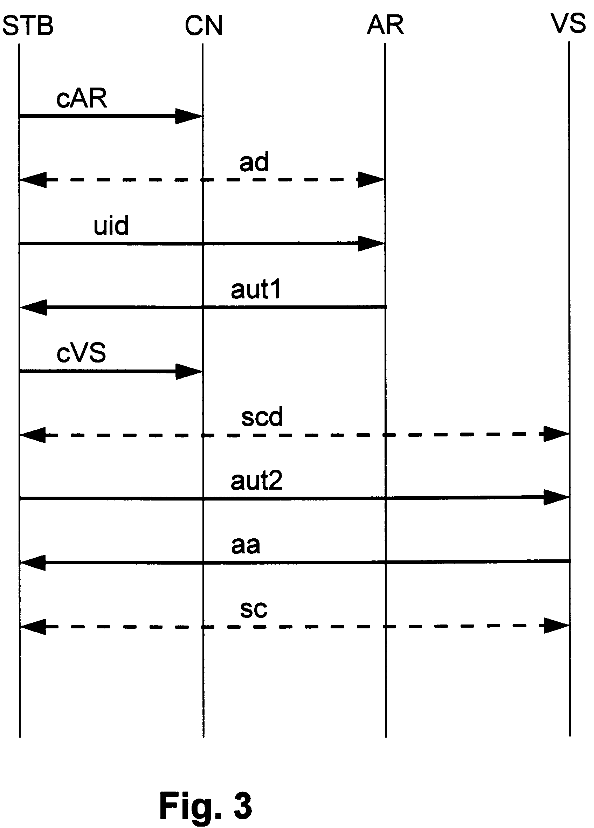

Figur 3 zeigt den Ablauf der Kommunikation zwischen den Komponenten zu dem Zeitpunkt, wenn der Dienst genutzt wird, wenn also z.B. ein Film abgerufen wird. Bevor sich die Set-Top-Box (STB) mit dem Informationsserver verbinden kann, muß ein Auswahlprozeß unter den zugänglichen Servern stattgefunden haben, etwa mit Hilfe eines speziellen Rechners zur Dienstvermittlung (manchmal "Broker" genannt).

Bevor der Informationsserver angesprochen werden kann, muß zunächst eine Verbindung zum Autorisierungsserver aufgebaut werden (cAR). Der Dienstnutzer identifiziert sich (uid) mit seinem Namen und der mit dem Vermittler vereinbarten PIN. Daraufhin wird ein gültiges Transaktionsdatenwort (z.B. aus einer aktuellen Tabelle) oder auch mehrere Transaktionsdatenworte an die Set-Top-Box (STB) übertragen (aut1). Transaktionsdatenworte sind z.B. im deutschen Datex-J-System der Telekom (Transaktionsnummern) üblich, z.B. bei Homebanking-Anwendungen. Sie können dort nur einmal verwendet werden; die fehlerhafte Eingabe ist auf wenige Versuche beschränkt. Im Zusammenhang mit dieser Erfindung kann der Fachmann (ggf. mit Hilfe der einschlägigen Literatur) leicht andere Formen einer Nutzungsberechtigungsinformation einsetzen, ohne selbst erfinderisch tätig werden zu müssen. In diesem Sinne ist in Anspruch 1 allgemeiner von einer Nutzungsberechtigungsinformation die Rede.

Anschließend kann die Verbindung zum Informationsserver aufgebaut werden (cVS), wobei die Anschlußnummer der Set-Top-Box (STB) verborgen bleiben kann (CLIR = Calling Line Identification Restriction, im ISDN und B-ISDN unterstützt). Vor der Abwicklung des eigentlichen Dienstes (sc) wird die Autorisierung des Benutzers dadurch sichergestellt, daß die Set-Top-Box (STB) dem Informationsserver das (vorher vom Autorisierungsserver erhaltene) Transaktionsdatenwort überträgt (aut2). Der Informationsserver hat nun die Gültigkeit des Transaktionsdatenwortes zu überprüfen und abhängig davon den Benutzer zur Dienstnutzung zulassen.

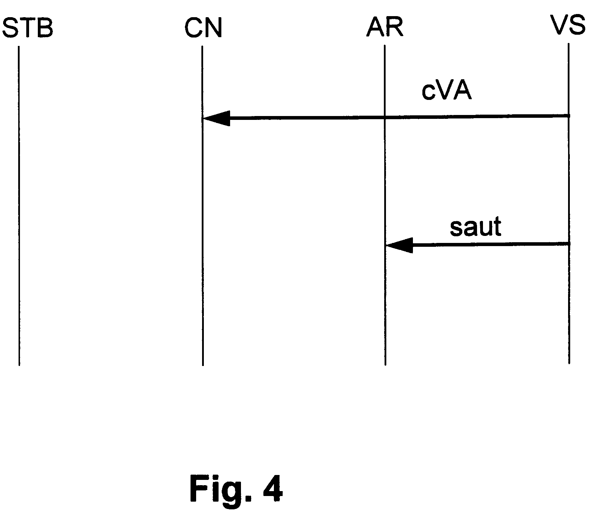

Selbstverständlich ist der oben geschilderte Ablauf abhängig davon, daß der Informationsserver die zulässigen Transaktionsdatenworte kennt. In dieser Erfindung wird das dadurch sichergestellt, daß die Transaktionsdatenworte entweder vom Informationsserver oder vom Autorisierungsserver willkürlich festgelegt werden und über eine Kommunikation zwischen Informationsserver und Autorisierungsserver abgestimmt werden. Figur 4 zeigt eine mögliche Lösung durch eine Interaktion, die mit zeitlichem Abstand der eigentlichen Dienstnutzung vorausgeht und auch für mehrere Dienstnutzungen gültig sein kann. Der Videoserver legt dabei eine Autorisierungsbasis fest (z.B. eine Tabelle von willkürlich gewählten Transaktionsdatenworten) und teilt sie dem Autorisierungsserver mit (saut). Analog kann die Initiative für die Erzeugung der Transaktionsdatenworte und den Verbindungsaufbau auch vom Autorisierungsserver ausgehen. Die in Figur 4 gezeigte Lösung ist besonders sicher gegen Mißbrauch, da der Informationsserver zu dem Zeitpunkt, wenn er Kontakt mit dem Autorisierungsserver aufnimmt, noch keinerlei Information über die zukünftige Dienstnutzung haben kann.

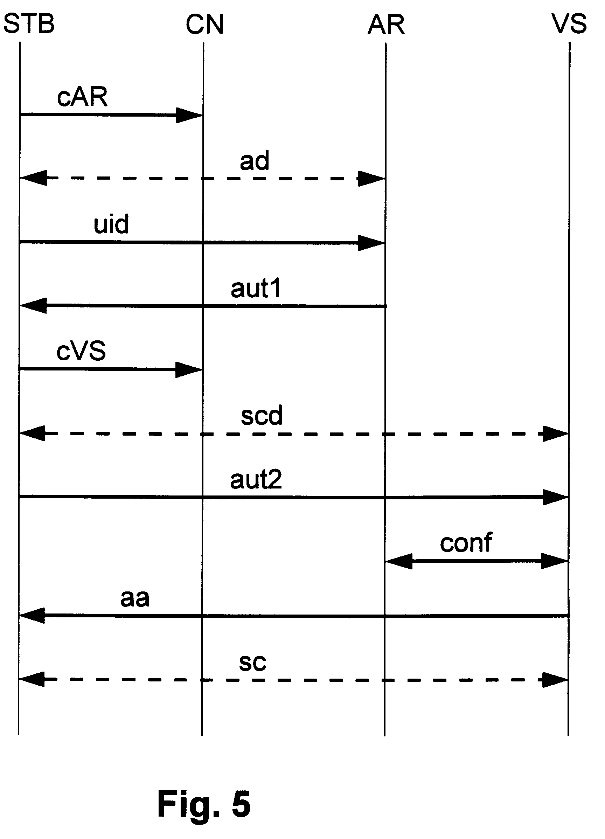

Eine weitere Lösung wird in Figur 5 angedeutet. Es ist auch möglich, daß der Videoserver erst bei Bedarf (also bei Dienstnutzung/Filmabruf) Kontakt mit dem Autorisierungsserver aufnimmt. In diesem Fall kann der Autorisierungsserver das an die Set-Top-Box (STB) gegebene Transaktionsdatenwort willkürlich wählen, und die Kommunikation zwischen Videoserver und Autorisierungsserver ist eine reine Rückfrage (conf).

Es sind verschiedene weitere Varianten des oben genutzten Verfahrens denkbar, unter anderem folgende:
- Die verbrauchsgerechte Abrechnung für den Dienst kann auf verschiedene Weise sichergestellt werden. Die Anonymität des Benutzers wird am wirkungsvollsten geschützt, wenn die vergebenen Transaktionsdatenworte als "Gutscheine" für eine bestimmte Menge an Leistungen aufgefaßt werden. Alternativ könnte der Videoserver dem Autorisierungsserver die Gesamtsumme der verbrauchten Leistungen für ein Transaktionsdatenwort (ohne Bezug auf Nutzungsdetails, wie Nutzungszeit, Filmkategorie etc.) mitteilen.
- Die Funktion eines Autorisierungsservers kann mit der Sicherstellung eines regulierten Zugangs zu interaktiven Multimediadiensten kombiniert werden, wie er unter Umständen von rechtlichen Rahmenbedingung gefordert wird (z.B. "Level 1 Gateway" in den USA). Hierzu darf der Netzbetreiber nur Dienstanbieter zulassen, die nach dem oben beschriebenen Verfahren arbeiten und muß selbst den Autorisierungsserver betreiben. Besonders günstig ist es hierfür, den Autorisierungsserver mit der Auswahlfunktion für einen Videoserver ("Broker") zu kombinieren.
- Transaktionsdatenworte können durch die Angabe von "Verfallsdaten" nur für begrenzte Zeit gültig gemacht werden, um die Möglichkeiten des Mißbrauchs weiter einzuschränken.

Die Erfindung ermöglicht die Nutzung interaktiver Videodienste unter Sicherstellung der Anonymität des Dienstnutzers gegenüber dem Dienstanbieter. Dies ermöglicht die Einhaltung von Datenschutzbestimmungen (nur nutzungsbezogene, keine personenbezogenen Daten beim Dienstanbieter). Darüberhinaus kann die Erfindung ein wichtiges Unterscheidungsmerkmal in der Marktkonkurrenz von Dienstanbietern darstellen, da den Dienstnutzern ein weitestgehender Schutz vor Belästigungen durch Datenmißbrauch geboten werden kann.

In einem Netz mit reguliertem Zugang zu interaktiven Videodiensten schließlich ermöglicht die Erfindung die Nutzung einfacher und standardisierter Verfahren zum Verbindungsaufbau (etwa Selbstwählverbindungen), ohne die Kontrolle des Netzbetreibers zu beeinträchtigen.

## Patentansprüche

1. Verfahren zur Nutzung von elektronischen Informationsdiensten unter Sicherstellung der Anonymität von Benutzern gegenüber den Betreibern solcher Dienste, bei dem
a) eine Verbindung zwischen einem Kommunikationsendgerät (STB) des Benutzers und einem Informationsserver (VS) über ein Kommunikationsnetz (CN) hergestellt wird;
b) eine Verbindung zwischen einem Kommunikationsendgerät des Benutzers und einem Autorisierungsserver (AR) über ein Kommunikationsnetz hergestellt wird;
c) vom Kommunikationsendgerät des Benutzers eine Identifikationsinformation an den Autorisierungsserver (AR) übertragen wird;
d) vom Autorisierungsserver eine Nutzungsberechtigungsinformation an ein Kommunikationsendgerät des Benutzers übertragen wird, welche keine Information über die Identität des Benutzers enthält;
e) diese Nutzungsberechtigungsinformation von einem Kommunikationsendgerät des Benutzers an den Informationsserver übertragen wird, woraufhin dieser die Gültigkeit der Nutzungsberechtigungsinformation überprüft und den Benutzer bei positivem Ergebnis der Prüfung zur Nutzung des Informationsdienstes zuläßt.

2. Verfahren nach Anspruch 1, bei dem die Nutzungsberechtigungsinformation aus einem Transaktionsdatenwort oder einer Folge von Transaktionsdatenworten besteht.

3. Verfahren nach Anspruch 2, bei dem diese Transaktionsdatenworte jeweils nur einmal zum Nachweis der Nutzungsberechtigung verwendet werden können und nach dieser einmaligen Nutzung ihre Gültigkeit verlieren.

4. Verfahren nach Anspruch 3, bei dem ein Transaktionsdatenwort einem bestimmten Geldwert entspricht.

5. Verfahren nach Anspruch 3, bei dem ein Transaktionsdatenwort einer bestimmten Nutzungszeiteinheit entspricht.

6. Verfahren nach einem der Ansprüche 2 oder 3, bei dem ein Transaktionsdatenwort zur Nutzung eines bestimmten Angebotes berechtigt.

7. Verfahren nach einem der vorhergehenden Ansprüche, bei dem die Verbindung zwischen dem Kommunikationsendgerät des Benutzers und dem Informationsserver so beschaffen ist, daß die Identität des Benutzers dem Informationsserver verborgen bleibt.

8. Verfahren nach einem der vorhergehenden Ansprüche, bei dem die Gültigkeit der Nutzungsberechtigungsinformation zeitlich beschränkt ist.

9. Verfahren nach einem der vorhergehenden Ansprüche, bei dem der Informationsserver Abrechnungsinformationen zu benutzten Nutzungsberechtigungsinformationen an den Autorisierungsserver (AR) überträgt, wobei diese Abrechnungsinformationen keine Informationen über die Art der Nutzung enthalten.
